(19) Europäisches Patentamt
European Patent Office
Office européen des brevets

(11) Publication number: 0 174 270
A2

# (12) EUROPEAN PATENT APPLICATION

(21) Application number: 85810361.7

(22) Date of filing: 05.08.85

(51) Int. Cl.⁴: C 08 J 3/10

(30) Priority: 09.08.84 GB 8420202

(43) Date of publication of application: 12.03.86 Bulletin 86/11

(84) Designated Contracting States: CH DE FR GB LI

(71) Applicant: CIBA-GEIGY AG
Klybeckstrasse 141
CH-4002 Basel(CH)

(72) Inventor: Cawse, John Leslie
6 Field Close
Bollington Cheshire SK10 5JG(GB)

(72) Inventor: Lovell, Peter Alfred, Dr.
30, Cleveland Road
Hale Cheshire WA15 8AY(GB)

## (54) Preparation of a solid dispersion.

(57) A method of preparing a fine dispersion of a solid altered polymeric material which comprises forming a solution of the polymeric material which is to be altered and the other components of the final polymeric solid in a first organic solvent, dispersing this solution in a in a second organic solvent which is immiscible with the said first solvent but which is of higher boiling point than the said first solvent, in the presence of at least one dispersion stabiliser, treating the thus formed dispersion to remove the said first solvent by heating and/or reduction in pressure of the dispersion whilst continuously agitating the dispersion thereby to form a fine dispersion of the solid altered polymeric material in the second solvent.

THIS INVENTION relates to preparation of fine dispersions of polymeric materials.

Usually it is comparatively easy to prepare polymeric materials as fine dispersions in a liquid or as very fine powder. However if it is required to alter the polymeric material after it has been formed for example if the polymeric material is required to be cross-linked to form a network polymer or to be used as the solvent in a solid solution then such alteration often involves the step of dissolving the polymeric material in a solvent. The alteration step takes place in solution but usually a solid mass of the altered polymeric material is formed either in the solvent or after the solvent has been removed. In either event it is often difficult to remove this mass from the reaction vessel and after removal it usually requires to be ground down to small particle size by energy intensive and time consuming processes such as rotary - or hammer - milling.

It is the object of the present invention to provide a method of preparing a fine dispersion of a solid altered polymeric material which does not require a solid mass of the altered polymeric material to be broken down.

By solid altered polymeric material is meant solid particles of a polymeric material which has been altered either physically or chemically in a process in which the original polymeric material is dissolved in an organic solvent.

According to the present invention there is provided a method of preparing a fine dispersion of a solid altered polymeric material which comprises forming a solution of the polymeric material which is to be altered and the other components of the final polymeric solid in a first organic solvent, dispersing this solution in a second organic solvent which is immiscible with the said first solvent but which is of higher boiling point than the said first solvent, in the presence of at least one dispersion stabiliser, treating the thus formed dispersion to remove the said first solvent by heating and/or reduction in pressure of the dispersion whilst continuously agitating the dispersion thereby to form a fine dispersion of the solid altered polymeric material in the second solvent. Thereafter if required the fine particles of the solid altered material may be separated from the solvent and dried.

Suitable methods of separating the solid particles from the second solvent include filtering and centrifuging.

During the course of the method as just set forth the polymeric material becomes altered. Sometimes this requires heat as for example when the polymeric material is cross-linked to form a network polymer. Other forms of alteration do not necessarily require heat as for example when a solid is required to be dissolved in the polymeric material.

Preferably the second solvent has a boiling point at least 10°C higher than the first solvent. This is to ensure that the dispersed phase solvent, that is to say the first solvent, can be removed at elevated temperature and/or reduced pressure without loss of a significant volume of the continuous phase solvent, the second solvent. In some circumstances however it is advantageous for the second solvent to form an azeotrope with the first solvent which may be distilled over at a comparatively low temperature.

Preferably the polymeric material together with the other components required to form the altered polymeric material are dissolved in the first solvent and this solution is added with continuous agitation to the second solvent which contains dissolved therein the dispersion stabiliser to form a homogeneous dispersion. Then usually the temperature of the dispersion is raised slowly until the first solvent or the azeotrope distils over. At this stage the temperature may be raised to complete the removal of the first solvent or if required the temperature may be maintained at a predetermined elevated temperature for sufficient time for the alteration reaction to be completed. When this reaction has finished then the temperature is raised to remove all of the first solvent. For example most cross-linking reaction require a period at an elevated temperature for the cross-linking to be completed.

It is necessary to choose a pair of solvents which remain immiscible over the entire temperature range from ambient temperature to the boiling point of the first solvent. Further, the two solvents must be immiscible over the range of relative proportions of the two solvents encountered during the preparation. In most useful pairs of solvent the first solvent is a polar solvent and the second solvent is relatively non-polar.

In choosing the solvents the first essential is that the polymeric material and the other components present in the final altered polymeric material are all soluble therein. Then a second solvent, which is immiscible with the first solvent and which has a higher boiling point than the first solvent is chosen. It is required that the second solvent is a non-solvent for the components of the altered polymeric material and for the altered polymeric material itself.

Examples of useful first solvents are methanol, acetonitrile, ethanol and nitromethane.

Useful solvents for the continuous phase are linear hydrocarbons such as nonane, petroleum ethers which have a boiling point of over 80°C and especially those which have a boiling point within the range of 120°C - 200°C. Also, so-called liquid paraffins and especially the light fraction liquid petrolatums which have a specific gravity within the range 0.83-0.86.

Useful combinations of solvents for use in the method of the present invention when the alteration reaction is either a cross-linking of the polymeric material or the preparation of a solid solution, using the polymeric material as a solvent are:-

| First Solvent | Second Solvent |
|---|---|
| Methanol | 120-160° pet ether, (below 50% MeOH). |
| Ethanol (94%v/v) | Liquid paraffin (all proportions) |
| Methanol | Liquid paraffin (all proportions) |
| Acetonitrile | 120-160 pet ether, (below 60% MeCN). |
| Acetonitrile | Liquid paraffin (all proportions) |

For some purposes it is preferable that both the dispersed phase and the continuous phase be aprotic, for example in the preparation of particulate crosslinked polyurethanes. The presence of methanol (or water) in such a case would lead to undesirable products, via reaction between the polyfunctional isocyanate and the dispersed phase solvent.

Acetonitrile would then be the solvent of choice. Acetonitrile on the other hand is capable of being hydrolysed under certain conditions (presence of strong acid or base, for example as reaction catalysts) and this might preclude its use for some purposes.

The presence of a dispersion stabiliser which is essentially a type of surface active agent in the method of the present invention is essential to promote the formation of a stable dispersion, both initially and during the removal of the first solvent in the continuous phase. Dispersion stabilisers of particular utility for the continuous phase include oil-soluble non-ionic compounds, block and graft copolymers and especially alkylated vinylpyrrolidone polymers typified by the Antaron series marketed by GAF Corporation of the U.S. Though less critical than the use of a dispersion stabiliser in the continuous phase it is sometimes desirable to employ a dispersion stabiliser in the dispersed phase and suitable agents include polyethoxylated fatty acids and nonyl phenol ethoxylates.

The particle size in the final dispersion of solid in the second solvent is usually below 100um and often within the range of 2 to 30um. The particle size is dependent on the original polymeric material used, on the other components of the final altered polymeric material, on the rate of agitation employed when forming the dispersion of first solvent in the second solvent and on the dispersion stabiliser(s) employed.

The method of the present invention is of use when it is required to prepare either a dispersion of fine particles or dried fine particles of an altered polymeric material wherein the alteration step requires the dissolution of the polymeric substances. One such alteration is the production of a cross-linked or network polymer from a linear polymer. It is possible to alter a linear polymer to incorporate reactive sites in the resulting altered polymer. Also it is possible to alter very considerably the physical parameters of the polymer. Further during the cross-linking of the polymer it is possible to incorporate other substances in the cross-linked polymer. Thus the solid altered polymeric materials produced in the method of the present invention find use as for example ion exchange resins, reactive polymer substrates, slow-release matrix materials, chromatography media, anti-blocking agents and reactive polymeric fillers which are useful for the reinforcement of elastomers.

Another such alteration is the formation of a solid solution which comprises the polymeric material having dissolved therein another substance. Such solid solutions find use as slow release matrixes and vehicles for dyes and pigments.

In the Examples which follow the following trade names of chemicals are referred to:-

ANTARON V-220

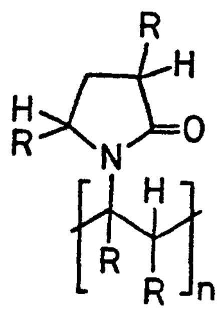

(Manufacturer's information)

R = H or alkyl

An alkylated polyvinylpyrrolidone copolymer M.W. between 7300 and 20000. Manufactured by G.A.F. (Trade mark of GAF).

TWEEN 85

Polyoxyethylene(20)trioleate. Manufactured by Atlas. (Trade mark of Atlas.).

CYMEL 303

Hexamethoxymethylmelamine.

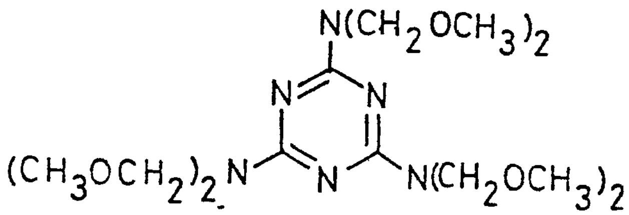

(Manufacturer's information)

Manufactured by American Cyanamid. (Trade mark of Cyanamid).

Leucophor B.C.F.

A water-soluble optical brightening agent marketed by Sandoz, and comprising the sodium salt of a diaminostilbene sulphonic acid. (Trade mark of Sandoz),

The following examples serve to illustrate the invention and describe the prepartion of particulate dispersions of i) network polymers (Examples 1 and 2) and ii) solid solutions of an optical brightening agent (OBA) in polymer (Examples 3 and 4).

Example 1

Into a 250ml reaction vessel, maintained at 60°C and provided with a nitrogen inlet, stirrer and facility for distillation, was charged a mixture of 120-160° petroleum ether (124ml) and Antaron V-220 (6.2g) as colloid stabiliser. To this was added, with continuous agitation, a solution in methanol (26ml) of Tween 85 (1.18g), concentrated hydrochloric acid (0.4ml), Cymel 303 (5.44g) and a methyl methacrylate/methacrylic acid copolymer (63/27 molar percent, acid number 368, intrinsic viscosity in MEK at 25° 0.131) (13.1g). A translucent emulsion was formed. The temperature was raised gradually and a methanol/petroleum ether azeotrope began to distil over at a pot temperature of 67°C. The temperature was raised smoothly over a period of two hours up to 117°C and then more slowly to 130°C over a further two hours. The distillate comprised an upper layer (pet ether) of 10ml and a lower layer (methanol) of 29ml. The extra methanol (3ml) was generated during the cure reaction between Cymel and the carboxylic acid groups in the polymer.

The resultant white suspension was cooled to room temperature and allowed to settle. The supernatant liquor was decanted and the slurry filtered and washed with 60-80° petroleum ether and then dried to yield a white, free flowing powder (12.02g). The particle size of the white powder was 2-6μm, average 4μm.

In a similar way were prepared materials having differing Cymel:polymer ratios (that in the above example being Cymel: polymer 0.41) e.g. Cymel:polymer 0.13 and 1.35 w/w. Both were obtained as white, free flowing powders. The products were shown to be crosslinked by their failure to dissolve in common solvents on prolonged soxhlet extraction.

With the ratio of 1.35 Cymel/polymer the resultant particle size was 2-10μm, average 5 μm.

With the ratio of 0.13 Cymel/polymer the resultant particle size was 2-20μm. Average 6μm.

Example 2

A similar procedure to that described in Example 1 was used to prepare a network polymer from methyl vinyl ketone/methacrylic acid copolymer (90/10 molar percent) by reaction with Cymel 303. Thus a solution of the copolymer (3.24g) in methanol (8 ml) was prepared and to this was added Tween 85 (0.24g), concentrated hydrochloric acid (0.08 ml) and Cymel 303 (0.41g). This solution was then added, as in the previous example, to a stirred solution of Antaron V-220 (1.36g) in 120-160 petroleum ether (27 ml). Methanol was removed from the stirred suspension by raising the temperature which was then further increased to 130° in order to cure the polymer. The total reaction time was $3^1/_2$ hours. The suspension was cooled and filtered through coarse cellulose cloth to remove coagulated polymer. The remaining slurry was left to settle, decanted, filtered, washed and dried to yield 1.05g of fawn coloured free-flowing powder, insoluble in methanol.

The particle size of the fawn coloured particles was 2-16μm, average 10μm.

Example 3

A solution was prepared consisting of Antaron V-220 (1g) dissolved in light liquid paraffin, and to this, with stirring, was added a solution of Leucophor BCF (0.88g), Tween 85 (0.33g) and a copolymer of N-vinylpyrrolidone/methyl methacrylate (50 molar percent) (5.0g) in acetonitrile (50ml) and methanol (10ml) (present to facilitate solution of the OBA). The acetonitrile/methanol was removed by gradually raising the temperature of the suspension to 110°. After cooling and removing a small amount of coagulated material, the suspension was allowed to settle, decanted, filtered, washed and dried to yield 5.0g of a highly fluorescent white powder, particle size range 8-20µm, average 16µm. The powder was readily dispersible in water without substantial leaching of the brightening agent.

Example 4

In a similar way Leucophor BCF was incorporated in a copolymer of 4-vinylpyridine/methyl methacrylate (50% molar percent).

A solution of Leucophor BCF (1.25g), Tween 85 (0.41g), 4-vinyl pyridine/methylmethacrylate polymer (5.0g) in methanol (30ml) was added to a stirred solution of Antaron V-220 (2g) in liquid paraffin (166ml), and methanol removed by raising the temperature. After work-up there was obtained 5.84g of highly fluorescent powder. Particle size 4-30μm, average 14μm.

CLAIMS:-

1. A method of preparing a fine dispersion of a solid altered polymeric material which comprises forming a solution of the polymeric material which is to be altered and the other components of the final polymeric solid in a first organic solvent, dispersing this solution in a second organic solvent which is immiscible with the said first solvent but which is of higher boiling point than the said first solvent, in the presence of at least one dispersion stabiliser, treating the thus formed dispersion to remove the said first solvent by heating and/or reduction in pressure of the dispersion whilst continuously agitating the dispersion thereby to form a fine dispersion of the solid altered polymeric material in the second solvent.

2. A method according to Claim 1 wherein the fine particles of the solid altered material are separated from the solvent and dried.

3. A method according to either Claim 1 or Claim 2 wherein the polymeric material together with the other components required to form the altered polymeric material are dissolved in the first solvent and this solution is added with continuous agitation to the second solvent which contains dissolved therein the dispersion stabiliser to form a homogeneous dispersion,

then optionally raising the temperature of the dispersion until the first solvent or the azeotrope distils over, then further raising the temperature to complete the removal of the first solvent or if required maintaining the temperature at a predetermined elevated temperature for sufficient time for the alteration reaction to be completed, then raising the temperature further to remove all of the first solvent.

4. A method according to any one of Claims 1 to 3 wherein the dispersion stabiliser is an oil-soluble non-ionic compound or a block or graft copolymer.

5. A method according to any one of Claims 1 to 3 wherein the dispersion stabiliser is an alkylated vinylpyrrolidone polymer.

6. A method according to Claim 5 wherein the alkylated vinylpyrrolidone polymer is marketed under the name of Antaron.

7. A method according to any one of Claims 1 to 6 wherein a network polymer is formed from a linear polymer.

8. A method according to any one of Claims 1 to 6 wherein a solution of another substance in the polymeric material is formed.

9. A method of forming a fine dispersion of a solid altered polymeric material according to Claim 1 and substantially as hereinbefore described with reference to the accompanying examples.